(19) **Europäisches Patentamt / European Patent Office / Office européen des brevets**

(11) **EP 4 674 918 A1**

(12) # EUROPEAN PATENT APPLICATION

(43) Date of publication:
**07.01.2026 Bulletin 2026/02**

(21) Application number: **24185805.9**

(22) Date of filing: **01.07.2024**

(51) International Patent Classification (IPC):
**C09D 5/00** *(2006.01)*     **C09D 7/61** *(2018.01)*
**C09D 7/63** *(2018.01)*     **C09D 105/00** *(2006.01)*

(52) Cooperative Patent Classification (CPC):
(C-Sets available)
**C09D 5/00; C09D 7/61; C09D 7/63**          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **NUVI RELEAF GMBH
35463 Fernwald (DE)**

(72) Inventors:
- **RÖßLER, Andreas
  35463 Fernwald (DE)**
- **RIBEIRO, Filipe
  60327 Frankfurt am Main (DE)**

(74) Representative: **WSL Patentanwälte
Partnerschaft mbB
Kaiser-Friedrich-Ring 98
65185 Wiesbaden (DE)**

(54) **COMPOSITION**

(57)     The invention relates to a composition with a marine or limnic filler, a composite and an object coated with a composite in form of a coating.

EP 4 674 918 A1

(52) Cooperative Patent Classification (CPC): (Cont.)

C-Sets
**C09D 105/00, C08K 3/013;**
**C09D 105/04, C08L 5/12, C08K 3/013;**
**C09D 105/12, C08L 5/04, C08K 3/013**

**Description**

**FIELD OF THE INVENTION**

The invention relates to a composition, a composite, a coating, and an object coated with this coating.

**BACKGROUND OF THE INVENTION**

Material formulations are specifically designed compositions prepared to achieve desired properties and functionalities in various manufacturing processes. An example for such a composition is a composition, from which a protective or functional layer can be formed on an object. Another example is an injection moulding compound, which is melted and then cooled within a mould. These compositions are composed of several key components, each serving specific roles to impart desired properties to the final dried and/or cured product, i.e. the composite. The main components are regularly binders, fillers, solvents, and additives.

Binders are substances that hold or draw other materials (filler material and/or the plasticizer and/or optional additives) together to form a cohesive composite material.

Fillers are inert materials added to improve physical properties of the dried and/or cured product, such as hardness, durability, and resistance to wear. Fillers can also affect the viscosity and the overall cost-effectiveness of the composition. The mechanical properties, durability, and resistance of the dried and/or cured product to environmental factors are mainly influenced by both the binder and the filler.

The solvent of the composition dissolves or disperses the binder and other components for simplifying or enabling the processing. Solvents evaporate after processing. In case of a coating formulation, this allows the coating to form a solid film.

Finally, a wide range of substances can be added in small quantities to enhance specific characteristics of the final dried or cured product. These can include *inter alia* UV stabilizers, antifoaming-, wetting-, and anti-settling agents.

However, the filler materials regularly used are derived from mining processes, such as mining of silica, talc, barium sulfate or mica, wherein the mining often has a great environmental impact including low sustainability and potential contamination.

Furthermore, mining conditions are often associated with ethical concerns regarding labor practices. In addition, often high energy consumption and substantial amounts of emissions, are posing severe concerns on the use of such materials.

**AIM**

Against this background, the task of the invention is therefore to provide a composition which can be produced in an environmentally friendlier and/or more sustainable manner than the formulations known from the prior art and/or which results in a biodegradable dried and/or cured product (=composite) and/or which can be used in a broad variety of applications.

**DESCRIPTION OF THE INVENTION**

According to the invention, this task is solved by a composition comprising the following components:

  A) a polysaccharide binder,
  B) a filler material,
  C) a solvent, preferably water,

wherein the filler material is a marine or limnic filler material, wherein the marine or limnic filler material is selected from the group consisting of marine minerals, hydrophytes, scales and/or skeletal elements of aquatic organisms, marine fungi, or mixtures of the foregoing.

The inventive composition comprises at least one binder, i.e. a substance that can form a matrix that holds or draws other materials (filler material and/or the plasticizer and/or optional additives) together in order to form a cohesive composite material after a drying and/or curing process. Preferably, the binder is a film-forming material, which is embedding or dissolving the filler material and/or the plasticizer and/or optional additives. After the evaporation of the solvent the matrix formed out of the binder ensures the cohesion of the cohesive composite material and preferably its adhesion to the substrate, if the composition is applied to one. The binder is present in the cohesive composite material in its set form and serves as a matrix material.

A polysaccharide is a complex carbohydrate macromolecule composed of long chains of monosaccharide units bound together by glycosidic linkages.

Filler materials are substances embedded within the matrix formed out of the binder, which are inert and do not react chemically with the polymer matrix. Fillers can be used to enhance mechanical strength, thermal stability, electrical conductivity, or other physical properties of the binder. The filler material is a marine or limnic filler material.

A marine filler material is a material naturally occurring in oceans, seas, and other saltwater environments. Preferably, the material is obtained from oceans, seas, and other saltwater environments, i.e. the material is collected from the above sources. The material may be directly used, but obtaining may also include post-treatment processes such as purification, extraction or refinement. Even if marine filler material can be obtained from other sources such as synthetic processes, a natural material is particularly preferred due to its environmental friendliness, sustainability, lower toxicity, better compatibility and improved properties.

Accordingly, a limnic filler material is a material naturally occurring in freshwater environments. Preferably, the material is obtained from freshwater environments, such as lakes and rivers, i.e. the material is collected from the above sources. The material may be directly used, but obtaining may also include post-treatment processes such as purification, extraction or refinement. Even if marine filler material can be obtained from other sources such as synthetic processes, a natural material is particularly preferred due to its environmental friendliness, sustainability, lower toxicity, better compatibility and improved properties.

It goes without saying that the composition only needs to comprise one of a marine or limnic filler, but can also encompass several different fillers, in particular combinations of marine and limnic fillers.

Marine minerals are naturally occurring mineral resources, preferably obtained from marine environments, including the ocean floor, coastal areas, and underwater geological formations. These minerals encompass a wide range of substances that are formed through geological processes within marine environments.

Hydrophytes are plants that grow in water or in soil that is permanently saturated with water, wherein the water can be saltwater and/or freshwater. Hydrophytes can either be located entirely underwater, floating on the water surface or rooted in the soil underwater but having their leaves and stems above the water's surface. Hydrophytes are also called aquatic plants and comprise all photoautotrophic organisms living in the aforementioned environments, including macrophytes and microphytes. Within the meaning of the present invention also algae and cyanobacteria are included.

Aquatic organisms are organisms that inhabit aquatic environments, including both freshwater and marine ecosystems.

Exoskeletons are external skeletal structures that can be biomineralized or unmineralized, providing support, protection, and structural integrity to the organism's body. Within the meaning of the present invention also external support structures serving a similar function to an exoskeleton, such as tunics, are included.

Endoskeletons are internal skeletal structures that provide support for the body, protect internal organs, and facilitate movement. Within the meaning of the present invention also specialized internal skeletal-like structures such as spicules, sclerites and ossicles are included.

Marine fungi are fungi that inhabit marine environments, including seawater, marine sediments, coastal habitats, and submerged substrates.

The plasticizer is a substance optionally added to the composition to increase flexibility, workability, and/or distensibility and/or to improve tactile properties, reduce brittleness, and/or lower the glass transition temperature of the coating obtained after hardening of the composition. Within the course of the hardening process of the binder, the plasticizer can form - preferably covalent - bonds with the binder, thereby permanently fixing the plasticizer in the matrix of the final dried or cured product. Hence, in the final composite the plasticizer can be contained both in bound or unbound state.

The term "solvent" refers to a liquid medium, in which a substance or mixtures can be dissolved or dispersed.

Through the combination of binder and filler, a composite with sufficient stability can be obtained, which is at the same time (elastically) deformable. In particular, the mechanical properties of the composite can be controlled *via* the properties of the filler material, especially its hardness. For example, with a marine mineral as a filler, a significantly stronger material can usually be obtained, whereas a hydrophyte material as a filler tends to lead to soft, i.e. highly flexible composite.

Depending on the filler material the composition not only gives the composite a good adhesion capability, an attractive appearance and sufficient stability, but also creates a pleasant marine and/or limnic scent. Furthermore, based on the availability of a broad spectrum of marine or limnic filler materials the composition according to the invention can be used to produce a composite in a wide range of colors and different grades of gloss - and regularly at competitive pricing. The composition according to the invention can therefore be used in a variety of applications.

Usage of marine or limnic filler materials, in particular obtained from marine or limnic resources, additionally supports sustainable practices by repurposing natural resources that are abundant for example in the ocean environment. This can reduce the reliance on non-renewable resources (such as crude oil) and minimize the environmental impact associated with traditional filler materials.

Of course - in addition to the marine or limnic filler material - the composition may comprise further filler materials.

The higher the binder content in the formulation, the higher the cohesion of the composite and the better the film formation in case of a composition. Preferably, the polysaccharide binder is contained in the inventive composition with $\geq 1$ wt.-%, more preferred with $\geq 3$ wt.-%, even more preferred with $\geq 5$ wt.-% or $\geq 8$ wt.-%, and most preferred with $\geq 10$ wt.-% or $\geq 12$ wt.-%.

However, a too high binder content may impact both the application process and the performance of the composite and may result in problems such as long drying times, difficult application, poor film formation and increased risk of defects in the final product. Therefore, preferably, the binder content is $\leq 50$ wt.-%, preferably $\leq 40$ wt.-%, more preferred $\leq 30$ wt.-% and most preferred $\leq 20$ wt.-% or even $\leq 15$ wt.-%.

In a preferred embodiment of the invention the composition comprises 3-35 wt.-% of the polysaccharide binder, preferably 3-25 wt.-%, more preferred 4-20 wt.-%, even more preferred 5-18 wt.-% and most preferred 5-15 wt.-%.

Regularly, a higher filler content in the composition improves the mechanical properties of the final composite. Further, an enhanced filler content may improve shrinkage behavior and reduce the costs of production and may result in a distinctive aesthetic look. Preferably, the filler is contained in the inventive composition with $\geq 1$ wt.-% or $\geq 3$ wt.-%, more preferred with $\geq 5$ wt.-%, even more preferred with $\geq 8$ wt.-% or $\geq 10$ wt.-%, and most preferred with $\geq 12$ wt.-% or $\geq 15$ wt.-%.

However, the filler content preferably does not exceed a certain threshold, as this might lead to application difficulties and a reduced flexibility of the final composite. Therefore, preferably, the filler content is $\leq 50$ wt.-%, preferably $\leq 40$ wt.-%, more preferred $\leq 30$ wt.-% and most preferred $\leq 25$ wt.-% or even $\leq 20$ wt.-%.

In a preferred embodiment of the invention the composition comprises 1-30 wt.-% of the filler, preferably 2-30 wt.-% or 3-25 wt.-%, more preferred 4-20 wt.-%, even more preferred 5-18 wt.- % and most preferred 5-15 wt.-%.

The filler may be used in a physical form selected from the group consisting of powder, granules, fiber or mixtures of the foregoing.

With a high content of solvent, the binder and additives of the composition can be dissolved or dispersed homogenously and in a short time frame. Therefore, preferably, the solvent contained in the inventive composition is at least 35 wt.-%, more preferred at least 40 wt.-%, even more preferred with at least 45 wt.-% or at least 50 wt.-%, and most preferred with at least 55 wt.-% or at least 60 wt.-%.

However, a too high solvent content may result in unduly long drying times, poor film formation and increased risk of defects in the final composite. Therefore, preferably, the maximum content of solvent is 95 wt.-%, preferably 90 wt.-%, more preferred 85 wt.-% and most preferred 80 wt.-% or 75 wt.-%.

In a preferred embodiment of the invention the composition comprises 35-95 wt.-% of the solvent C), preferably 40-90 wt.-%, more preferred 45-90 wt.-%, even more preferred 50-90 wt.- % and most preferred 55-90 wt.-%.

Preferably, the solvent is a water-based solvent, i.e. a solvent with $\geq 50$ wt.-%, preferably $\geq 70$ wt.-% or even $\geq 90$ wt.-%, water content. An example is mixture of water and ethylacetate.

To promote a uniform distribution of the filler in the composition, the weight ratio of solvent C) to polysaccharide binder A) $\frac{m_{C)}}{m_{A)}}$ is preferably $\geq 1$, more preferably $\geq 3$, even more preferably $\geq 5$ or $\geq 8$ and most preferably $\geq 12$, but in general also $\leq 200$.

In a preferred embodiment of the invention the composition further comprises a plasticizer, namely a polyhydric alcohol. By integrating into the polymer matrix, plasticizers decrease the intermolecular forces between the polymer chains, allowing them to slide past each other more easily. This process enhances the material's workability, durability, and can also impact its thermal properties.

The plasticizer is a substance added to the composition to increase flexibility, workability, and/or distensibility and/or to improve tactile properties, reduce brittleness, and/or lower the glass transition temperature of the composite obtained after hardening of the composition. Within the course of the hardening process of the binder, the plasticizer can form - preferably covalent - bonds with the binder, thereby permanently fixing the plasticizer in the matrix of the final composite. Hence, in the final composite the plasticizer can be contained both in bound or unbound state.

Without being bound by the theory, the inventors assume that the polyhydric alcohol reacts with the free functional groups of the polysaccharide binder thereby disturbing the crystalline structure. As a consequence, these materials exhibit a less pronounced crystallinity, which results in enhanced material's workability (lower gelation temperature ) as well as higher transparency.

A high plasticizer content is not only beneficial for these properties, but it also decreased brittleness and reduces glass transition temperature, which make the material more pliable at lower temperatures. Preferably, the plasticizer is contained in the inventive composition with $\geq 2$ wt.-%, more preferred with $\geq 3$ wt.-%, even more preferred with $\geq 5$ wt.-% or $\geq 8$ wt.-%, and most preferred with $\geq 10$ wt.-% or $\geq 12$ wt.-%.

However, the plasticizer content preferably does not exceed a certain threshold, as this might lead to reduced mechanical strength and temperature sensitivity. Therefore, preferably, the plasticizer content in the composition is $\leq 50$ wt.-%, preferably $\leq 40$ wt.-%, more preferred $\leq 30$ wt.-% and most preferred $\leq 20$ wt.-% or even $\leq 15$ wt.-%.

In a preferred embodiment of the invention the composition comprises 2-30 wt.-% of the plasticizer, preferably 3-25 wt.-%, more preferred 4-20 wt.-%, even more preferred 5-18 wt.-% and most preferred 5-15 wt.-%.

To ensure a sufficiently pronounced reaction between polysaccharide and polyhydric alcohol, the weight ratio of solvent C) to polysaccharide binder A) $\frac{m_{C)}}{m_{A)}}$ needs to be $\geq 1$, preferably $\geq 3$, more preferably $\geq 5$, even more preferably $\geq 8$ and most preferably $\geq 12$, but in general also $\leq 200$ or 150.

The polyhydric plasticizer alcohol is preferably a low molecular weight component with a molecular weight less than 1,000 g/mol, preferably less than 500 g/mol, and is particularly preferred selected from the group consisting of glycerol, sorbitol, 1,2-propanediol, glycol and alditols.

Regularly, low molecular weight plasticizers have a higher efficiency as regards softening of the polysaccharide binder. This means that lower amounts might be needed to achieve the desired flexibility, thereby improving the material's overall performance and cost profile.

However, the polyhydric plasticizer alcohol can also be a polymeric material such as a polyethylene glycol or polyethylene oxide. Due to their larger size and mass, high molecular weight plasticizers have a lower tendency to migrate out of the polymer matrix or volatilize over time, in particular in high temperature applications.

Preferably, the proportion of free plasticizer, i.e. plasticizer covalently unbound to the matrix, in the inventive composition is $\geq 1$ wt.-%, more preferred $\geq 2$ wt.-%, even more preferred $\geq 3$ wt.-% or $\geq 5$ wt.-%, and most preferred $\geq 6$ wt.-% or $\geq 8$ wt.-%.

However, the free plasticizer content preferably does not exceed a certain threshold, as this might lead to substantial sweating effect. Therefore, preferably, the free plasticizer content in the composition is $\leq 25$ wt.-%, preferably $\leq 20$ wt.-%, more preferred $\leq 15$ wt.-% and most preferred $\leq 10$ wt.-% or even $\leq 5$ wt.-%.

In a preferred embodiment of the invention the composition comprises 1-20 wt.-% of the free plasticizer, preferably 2-20 wt.-%, more preferred 3-15 wt.-%, even more preferred 3-12 wt.-% and most preferred 3-10 wt.-%. The determination of the proportion of free plasticizer can be accomplished by following the procedure disclosed in ASTM D1239-14 (including 24 h incubation @ 23°C in the proposed liquids).

In a preferred embodiment, the composition may contain additives such as pigments, UV stabilizers, flame retardants, dispersants, defoamers, fragrances, wetting agents, antioxidants, biocides, hydrophobic agents and mixtures of the foregoing. By adding additives, the properties of the composition can be changed, in particular color, flow behavior, overall performance and manufacturing price.

The weight proportion of the component E) - the additive - in the composition is preferably 0.5-30 wt.-%, more preferred 1-20 wt.-%, even more preferred 2-15 wt.-%, and most preferred 2-10 wt.-%.

In a preferred embodiment the composition may comprise one or more, preferably natural, marine minerals as filler material. The marine mineral is preferably selected from the group consisting of metallic marine minerals or non-metallic marine minerals, or mixtures of the foregoing.

In a preferred embodiment of the invention, the one or more marine mineral is a metallic marine mineral selected from the group consisting of polymetallic nodules, cobalt-rich crusts and seabed massive sulfides, or mixtures of the foregoing.

In a preferred embodiment of the invention, the one or more marine mineral is a polymetallic nodule, which contains a metal selected from the group of manganese, iron, copper, nickel, cobalt, lead, zinc, molybdenum, lithium, titanium, niobium, or mixtures of the foregoing.

In another preferred embodiment, the one or more marine mineral is a cobalt-rich crust, which contains a metal selected from the group of iron, manganese, nickel, cobalt, copper, rare earth elements, or mixtures of the foregoing.

In another preferred embodiment, the one or more marine mineral is a seabed massive sulfide, which contains a metal selected from the group of copper, iron, zinc, silver, gold, or mixtures of the foregoing.

In a preferred embodiment of the invention, the one or more marine mineral is a non-metallic marine mineral selected from the group consisting of chalk, kaolin, limestone, basalt, calcite, aragonite, marble, travertine, oolitic limestone, iron oxide, gypsum, halite, barite, slate, alumina, quartz, sand, opal and zeolite, or mixtures of the foregoing. Zeolites are particularly preferred because of their adsorption capacity, which can be used, for example, to adsorb odors.

In a preferred embodiment of the invention, the marine mineral is pH neutral, i.e. a 0.1 molar solution of the mineral in water has a pH in the range of 5-9, preferably 6-8. In this way, impairment of the other components of the composite can be avoided and a more durable layer composite can be obtained. Particularly preferably, the marine mineral and/or the composite itself are free of heavy metals, i.e. the proportion of metals with a density 5.0 g/cm$^3$ in the marine mineral is $\leq 1$ wt.-%, preferably $\leq 0.1$ wt.-%. This ensures that the composite according to the invention is particularly sustainable and environmentally compatible.

In a preferred embodiment the composition may comprise one or more hydrophytes as filler material. The one or more hydrophyte is preferably selected from the group consisting of algae, seagrass, mangroves, water lilies, lotus, water hyacinth, duckweed, cattails, bulrushes, or mixtures of the foregoing.

Preferably, the hydrophyte is an alga selected from the group of brown algae, red algae, green algae, diatoms, or mixtures of the foregoing. More preferably the hydrophyte is seaweed.

In another preferred embodiment the hydrophyte is a seagrass selected from the group of hydrocharitaceae, also known as tape-grass, halophila, vallisneria, zosteraceae, also known as eelgrass and cymodoceaceae, also known as manatee-grass, or mixtures of the foregoing.

According to the invention, "hydrophyte" means the whole of the photoautotrophic organism, and/or whole or comminuted parts of the organism, such as leaves, petals, stems, grass and roots, or mixtures thereof.

In a preferred embodiment, the hydrophyte can be treated. Treated hydrophyte is understood to be a photoautotrophic organism and/or a part of said photoautotrophic organism which have/has been preserved by fermentation, chemical treatment, in particular with alcohols, or by drying. In a preferred embodiment, the hydrophyte is fermented, i.e. it has been subjected to a fermentation process which has brought the hydrophyte to a state suitable for storage and consumption.

Alternatively, or additionally, the hydrophyte may be chemically treated prior to its use as filler, preferably this is done with a mixture of water and a polyhydric alcohol such as glycerol. This is particularly advantageous when the hydrophyte comprises or consists of whole leaves or sections of leaves. This gives the hydrophyte elastic deformability and increased breaking strength, in particular increased tensile strength and bending strength. Furthermore, the hydrophyte can continue to undergo a maturing process even in the composite, which improves the deformability and fracture strength of the dried and cured product or the object coated with a coating. The maturing process has a duration of at least one week, preferably two weeks, more preferably one month and most preferably two months.

Preferably the filler material is contained in the composition in powder form, wherein particularly preferred the D50 value, determined by laser diffraction according to DIN ISO 13320, is $\leq 150\,\mu$m, more preferred $\leq 100\,\mu$m, even more preferred $\leq 50\,\mu$m or $\leq 30\,\mu$m and most preferred $\leq 10\,\mu$m.

In another preferred embodiment the filler material is contained in the composition in particle form, wherein particularly preferred the D50 value, determined by laser diffraction according to DIN ISO 13320, is $\geq 200\,\mu$m, more preferred $\geq 250\,\mu$m, even more preferred $\geq 300\,\mu$m and most preferred $\geq 350\,\mu$m, but regularly $\leq 500\,\mu$m.

In a preferred embodiment, the filler material is contained in the composition in the form of fibers. Fibers may have varying lengths and be suitable for preparing the inventive composition in accordance with the present invention. Typical cross-sectional diameters of fibers that may be used in forming the dispersion of the present invention will be less than 5 mm, preferably less than 3 mm, more preferably less than 1 mm, even more preferably less than 0.5 mm. Typically, the length of the fibers that may be used in the forming of the dispersion of the present invention is much greater than the cross-sectional diameter. For example, a fiber may be greater than 10 times longer than its cross-sectional diameter, a fiber may also be up to 100 times longer than its cross-sectional diameter, a fiber may even be up to 1000 times longer than its cross-sectional diameter.

In a preferred embodiment, the filler material or binder are colored with a synthetic or preferably natural colorant. This allows the optical properties of various types of animal leather to be imitated. In a particularly preferred embodiment of the invention, the coloring agent is partially or completely food safe and/or consists of substances which can be returned to biological cycles as biological nutrients or continuously kept in technical cycles as technical nutrients (cradle-to-cradle certification).

In a preferred embodiment the filler material or binder are colored with algae and seaweed pigments, more preferably with spirulina pigments.

In a preferred embodiment of the invention the composition may comprise scales and/or skeletal elements of aquatic organisms. Particular preferably the skeletal element is selected from the group consisting of endoskeletons and exoskeletons, or mixtures of the foregoing.

In a preferred embodiment of the invention the marine or limnic filler comprises endoskeletons selected from the group consisting of vertebrate endoskeletons, particularly preferably fish bones; ossicles of echinoderms, particularly preferably sea urchin tests; spicules of porifera, particularly preferably spicules of calcarean, hexactinellida and demospongiae; sclerites of gorgonian; or mixtures of the foregoing.

In another preferred embodiment of the invention the marine or limnic filler comprises exoskeletons from aqueous organisms selected from the group consisting of corals, crustaceans, mollusks, bryozoans, particular preferably stenolaemata, gymnolaemata, and phylactolaemata, tunics, or mixtures of the foregoing. More preferably the limnic filler comprises shell limestone and/or shell aragonite and/or shell calcite.

In a preferred embodiment of the invention the marine or limnic filler comprises marine fungi. Particularly preferably the marine fungi are selected from the group consisting of basidiomycetes and ascomycetes, or mixtures of the foregoing.

The binder may be a synthetic polysaccharide. These are synthetic analogs designed to mimic the properties of natural polysaccharides.

However, in order to increase the biocompatibility and sustainability of the composite, the binder is preferably a biopolymer, which preferably consists of or at least comprises biogenic, i.e. renewable, raw materials and/or is biodegradable. Preferably, the binder is obtained from a marine or limnic source.

Preferably, the binder is a gelling agent.

In a preferred embodiment, the binder is a sulfated polysaccharide. A sulfated polysaccharide is a type of complex carbohydrate that has sulfate groups ($-SO_3$) attached to the sugar units within its molecular structure. Sulfated polysaccharides possess highly polarized and hydrogen bond-accepting sulfate groups, leading to stronger cohesion and more desirable properties in the resulting composite. Additionally, sulfated polysaccharides are readily available from renewable and vegan sources, offering significant advantages over traditional animal-derived binders such as gelatin or lecithin.

In a preferred embodiment, the polysaccharide binder is a sulfated polysaccharide containing 0.5 to 3, preferably 0.5 to 2 sulfate groups, per monosaccharide repeating unit and/or 1 to 6, preferably 1 to 2 sulfate groups per disaccharide repeating unit.

In some embodiments, the polysaccharide binder is a sulfated polysaccharide with a helical structure, preferably comprising repeating galactose units and 3,6 anhydrogalactose (3,6-AG), which can be sulfated and/or non-sulfated. In some embodiments, the polysaccharide binder includes carrageenan, galactose, anhydrogalactose fucan, ulvan, or combinations thereof.

Carrageenans are linear sulfated polysaccharides that form single or double helical structures. They consist of repeating galactose units and 3,6 anhydrogalactose (3,6-AG), both sulfated and non-sulfated, and can be extracted from seaweeds. There are three main types of carrageenan, differing in their degree of sulfation: kappa carrageenan has one sulfate group per disaccharide, iota carrageenan has two, and lambda carrageenan has three.

In a preferred embodiment, the polysaccharide binder is selected from the group consisting of kappa carrageenan, iota carrageenan, and lambda carrageenan. Preferably, the polysaccharide binder is kappa carrageenan.

Furcellaran (Danish agar) is a partially sulfated polysaccharide of the carrageenan family, comprising repeating units of both beta carrageenan and kappa carrageenan. Furcellaran closely resembles kappa carrageenan but has a lower degree of sulfation. In a preferred embodiment, the polysaccharide binder is furcellaran, which is preferably extracted from Furcellaria lumbricalis.

Sulfated fucans, often simply: Fucans, are a group of sulfated polysaccharides consisting of repeating sulfated fucose units. Fucoidan is an example of a fucan, found mainly in various species of brown algae and brown seaweed. In a preferred embodiment, the polysaccharide binder is fucan, more preferably fucoidan.

Ulvan is a sulfated polysaccharide obtained from green algae, comprising sulfated rhamnose, glucuronic acid, iduronic acid, and xylose. In a preferred embodiment, the polysaccharide binder is ulvan.

Preferably, the binder is selected from the group consisting of agar-agar, alginate, carrageenan, chitosan, alginic acid, pectin, xanthan, or mixtures of the aforementioned.

Particular preferably the binder is a natural polysaccharide isolated from a marine organism, more particular preferably the binder is a natural polysaccharide isolated from an algae.

In a preferred embodiment, the binder and/or the composition and/or the composite are substantially free of polyurethane or polyvinyl chloride, and particularly strongly preferably free of polyurethane and polyvinyl chloride. This is preferred because these polymers release partially toxic compounds during their decomposition. This makes it possible to obtain a particularly ecologically safe material. In this context, substantially free means that the proportion by weight of polyurethane and/or polyvinyl chloride in the total weight of the binder and/or the decorative layer and/or the layer composite is $\leq 20$ wt.-%, preferably $\leq 10$ wt.-%, more preferably $\leq 5$ wt.-%, more preferably $\leq 2$ wt.-%, even more preferably $\leq 1$ wt.-%, and most preferably $\leq 0.5$ wt.-%.

In a preferred embodiment of the invention, the solvent is seawater. Seawater is preferred as it contains minerals which can add to the advantageous physical properties of the inventive composition, in particular in regard to mechanical strength. This is particularly preferred when the composite comprises a comparably flexible filler material, such as hydrophytes.

Seawater can vary greatly in regard to salinity, density, pH and contained trace elements based on the geographic location, depth, temperature and proximity to land. Particularly preferably the seawater used as solvent in the present invention has a salinity of $\leq 3.8$ wt.-%, more particularly preferably of $\leq 3.6$ wt.-%. Too high a salt content can be disadvantageous as the dissolved sea salt can lead to unwanted salt deposits in the composite.

The solvent can also be brackish water. Brackish water is water occurring in a natural environment.

The salinity of brackish water typically falls between that of freshwater and seawater. Specifically, the salinity of brackish water ranges from 0.5 to 30 parts per thousand (wt.-‰). In comparison, freshwater has a salinity of less than 0.5 wt.-‰, while seawater has a salinity of > 30 wt.-‰. Brackish water is often found in estuaries, where freshwater from rivers mixes with seawater.

In another preferred embodiment the solvent is freshwater. Freshwater is any naturally occurring liquid or frozen water containing low concentrations of dissolved salts and other total dissolved solids.

It is advantageous to use saltwater and/or fresh water and/or brackish water as these are cheaply available. It is also environmentally beneficial to utilize wastewater supplies that may otherwise be discarded or require energy intensive water treatment before they can be reused, and to avoid unnecessarily using supplies of clean water.

Preferably, the composition has a form selected from the group consisting of suspension, emulsion, gel, foam or mixtures of the foregoing.

The invention also relates to a composite, such as an injection moulding compound or a coating comprising, A) a polysaccharide matrix, and B) a filler material, and optionally C) a plasticizer, namely a polyhydric alcohol, wherein the weight proportions of the components A) to B) in the composite are as follows:

A) 40-95wt.-%,
B) 5-60 wt.-%.

Preferably, the composite is an injection moulded part or a coating to be applied to an object.

The higher the matrix content in the composite, the higher the cohesion of the composite. Preferably, the polysaccharide matrix is contained in the inventive composite with $\geq 40$ wt.-%, more preferred with $\geq 45$ wt.-%, even more preferred with $\geq 50$ wt.-%, and most preferred $\geq 55$ wt.-%.

However, a too high binder content may impact both the performance of composite and may result in increased risk of defects in the composite. Therefore, preferably, the polysaccharide matrix content is $\leq 80$ wt.-%, preferably $\leq 75$ wt.-%, more preferred $\leq 70$ wt.-% and

most preferred ≤ 65 wt.-% or even ≤ 60 wt.-%.

In a preferred embodiment of the invention the composition comprises 40-70 wt.-% of the polysaccharide matrix, preferably 40-65 wt.-%, more preferred 40-60 wt.-%, even more preferred 45-55 wt.-% and most preferred 48-52 wt.-%.

Regularly, a higher filler content in the composite improves the mechanical properties of the composite. Further, an enhanced filler content may improve shrinkage behavior and reduce the costs of production. Preferably, the filler is contained in the inventive composite with ≥ 30 wt.-%, more preferred with ≥ 35 wt.-%, even more preferred with ≥ 40 wt.-%, and most preferred ≥ 45 wt.-%.

However, the filler content preferably does not exceed a certain threshold, as this might lead to a reduced flexibility of the composite. Therefore, preferably, the filler content is ≤ 60 wt.-%, preferably ≤ 55 wt.-%, more preferred ≤ 50 wt.-% and most preferred ≤ 45 wt.-% or even ≤ 40 wt.-%.

In a preferred embodiment of the invention the composition comprises 5-60 wt.-% of the filler, preferably 10-55 wt.-%, more preferred 15-50 wt.-%, even more preferred 20-40 wt.-% and most preferred 25-35 wt.-%.

The inventive plasticizer enhances the flexibility and softness of the material. A high plasticizer content is not only beneficial for these properties, but it also decreased brittleness and reduces glass transition temperature, which make the material more pliable at lower temperatures. Preferably, the plasticizer is contained in the inventive composition with ≥ 5 wt.-%, more preferred with ≥ 8 wt.-%, even more preferred with ≥ 10 wt.-% or ≥ 12 wt.-%, and most preferred with ≥ 15 wt.-%

However, the plasticizer content preferably does not exceed a certain threshold, as this might lead to reduced mechanical strength and temperature sensitivity. Therefore, preferably, the plasticizer content in the composition is ≤ 30 wt.-%, preferably ≤ 35 wt.-%, more preferred ≤ 30 wt.-% and most preferred ≤ 25 wt.-% or even ≤ 20 wt.-%.

In a preferred embodiment of the invention the composition comprises 5-30 wt.-% of the plasticizer, preferably 8-30 wt.-%, more preferred 10-30 wt.-%, even more preferred 12-25 wt.-% and most preferred 15-20 wt.-%.

In a preferred embodiment, the composite product may contain additives such as pigments, UV stabilizer, flame retardants, dispersant, defoamers, fragrances, wetting agents, antioxidants, biocides, hydrophobic agent and other fillers. By adding additives, the properties of the composite can be changed, in particular color, flow behavior and manufacturing price.

The weight proportion of the additive in the composite is preferably 1-40 wt.-%, more preferred 2-35 wt.-%, even more preferred 2-30 wt.-%, and most preferred 3-25 wt.-%.

The composite and its constituents can be configured as defined in the foregoing in respect to the composition.

In a further preferred embodiment, the transmission of the matrix of the composite in the visible wavelength range (380 to about 750 nm) is ≥ 30%, preferably ≥ 50%, more preferably ≥ 60% and most preferably of ≥ 80%. This makes it possible to obtain a composite, which can be particularly well backlit and can thus be used in various applications in the lighting field, for example as a composite for a lampshade or in the interior of a motor vehicle. In a preferred embodiment of the invention the composite exhibits a transmission, which is ≥ 30%, preferably ≥ 50%, more preferably ≥ 60% and most preferably of ≥ 80%.

Residual solvents can affect the physical properties of a composite. They may lead to problems like poor adhesion, lower mechanical strength, or undesired changes in the film properties. A low solvent content helps ensure the composite performs as intended.

Therefore, in a preferred embodiment, the proportion by weight of residual solvent and/or water in the composite is ≤ 10 wt.-%, more preferably ≤ 5 wt.-%, still considerably more preferably ≤ 2 wt.-%, still more preferably ≤ 1 wt.-% and most preferably ≤ 0.5 wt.-% or even ≤ 0.1 wt.-%.

The invention also relates to an object coated with an inventive coating, wherein said object is preferably selected from the group consisting of automotive parts, steel objects, leather, artificial leather, foams, in particular bio-based foams and/or latex foams; fiber materials such as yarns or textiles, appliances, tools, wood objects, electronic devices, footwear, textiles, paper products, concrete objects, medical devices, food and beverage containers.

In a preferred embodiment of the invention the object coated with the inventive coating comprises or consists of a material selected from the group consisting of wood, glass, polymer, metal or mixtures of the foregoing. Particularly preferred are these materials initially coated, e.g. with a water based acrylic or latex coating, and on top of this coating the inventive coating is deposited.

The invention also relates to a layer composite comprising an inventive coating, in particular as cover and/or intermediate layer, and at least one textile layer.

The textile carrier layer determines the structural strength of the composite and ensures good processability, in particular when the layer composite is processed by sewing.

In a preferred embodiment, the textile carrier layer has or consists of a material selected from the group consisting of nonwoven fabrics, woven fabrics, knitted fabrics, braids or mixtures of the aforementioned.

Nonwoven fabrics, woven fabrics, knitted fabrics, braids or mixtures of the aforementioned are textile materials which are composed of fibers but differ from one another in the arrangement of the fibers.

According to the invention, nonwoven is understood to mean a structure made up of fibers of limited length, continuous fibers (filaments) or chopped yarns of any kind and any origin, which have been joined together in some way to form a fiber layer and connected to each other in some way. This excludes the interlacing or intertwining of yarns, as occurs in weaving, knitting, lacemaking, braiding and the manufacture of tufted products. This definition corresponds to the standard DIN EN ISO 9092. According to the invention, the term nonwoven also includes felting fabrics. However, films and papers do not belong to nonwovens.

Preferably, the nonwovens are anisotropic nonwovens, i.e. those with fiber orientation. In this way, an anisotropic mechanical behavior of the layer composite can be produced, whereby its tear strength is increased.

According to the invention, woven fabric is understood to be a textile fabric consisting of two thread systems, warp (warp threads) and weft (weft threads), which cross each other in a pattern as seen on the fabric surface at an angle of exactly or approximately 90°. Each of the two systems can be made up of several warp or weft types (e.g. ground, pile and filling warp; ground, binding and filling weft). The warp threads run in the longitudinal direction of the fabric, parallel to the fabric edge, and the weft threads run in the transverse direction, parallel to the fabric edge. The threads are connected to the fabric mainly by friction. In order for a fabric to be sufficiently resistant to shearing, the warp and weft threads usually have to be woven relatively tightly. Therefore, with a few exceptions, the fabrics also have a closed fabric appearance. This definition corresponds to the standard DIN 61100, part 1.

According to the invention, the terms woven and nonwoven also include textile materials which have been tufted. Tufting is a process in which yarns are anchored in a woven or nonwoven fabric by a machine operated by compressed air and/or electricity.

According to the invention, knitted fabrics are understood to be textile fabrics which are produced from thread systems by stitch formation. This includes both crocheted and knitted fabrics.

For the purposes of the invention, braiding is understood to mean the regular interlacing of several strands of flexible material. The difference with weaving is that in braiding the threads are not fed at right angles to the main direction of the product.

The fibers of the nonwoven fabrics, woven fabrics, knitted fabrics, braids or mixtures thereof may be natural fibers, chemical fibers or mixtures of the aforementioned.

Preferably, the fibers are of plant or animal origin or chemical fibers made from natural polymers or polymers based on natural raw materials. In this way, the proportion of natural components of the layer composite and thus its sustainability and biodegradability can be improved accordingly.

Preferably, the natural fibers are selected from the group consisting of seed fibers, bast fibers, marine or limnic fibers, preferably natural marine or limnic fibers, such as algae fibers; leaf fibers and animal fibers. Particularly preferably, these are selected from the group consisting of cotton, animal wool, natural algae fibers, animal hair, silk, kapok, acon, poplar fluff, bamboo fiber, fiber nettle, hemp, hemp nettle, jute, urena, linen, ramie, kenaf, roselle, sunns, abutilon, pung, castor, sisal, abaca, curaua, fibe, xtle fiber, arenga, afrik, hequen, fique, phormium, alfa, maguey, yucca, pita, coir, broom, hop, bulrush and raffia.

Preferably, chemical fibers are selected from natural polymers or polymers based on natural raw materials. Particularly preferably, these are selected from the group consisting of viscose, modal, lyocell, curpo, cellulose acetates, protein fibers such as casein fibers, polylactides, alginates, chitin, bio-based polyamides, polyesters and polyisoprenes.

In another embodiment, the chemical fibers are made of synthetic polymers selected from the group consisting of polyesters such as PET or PBT, polyamide, polyimide, polyamideimide, aramid, poly(metha)acrylates, modyacryl, polytetrafluoroethylene (PTFE), polyethylene, polypropylene, polychloride, PVC, elastane, polystyrene, polycarbonate, polyvinyl alcohol, vinylal, polyphenyl sulphide, melamine, polyurea, polyurethane, polybenzimidazole, polybenzoxal.

In a preferred embodiment, the thickness of the textile carrier layer is 0.1 to 10 mm, more preferably 0.1 to 5 mm, particularly preferably 0.1 to 2 mm, most preferably 0.2 to 1 mm.

In a preferred embodiment, the basis weight (grammage) of the carrier layer is 50 to 500 g/m$^2$, more preferably 65 to 300 g/m$^2$, particularly preferably 80-200 g/m$^2$, most preferably 90-150 g/m$^2$. A low weight per unit area makes it possible to produce particularly lightweight layer composites.

The layer composite can have further layers. Preferably, these are selected from the group consisting of carrier, decorative (=outermost or visible layer designed primarily for aesthetic purposes), adhesive and cover layers (=outermost layer, preferably comprising or consisting of inventive coating). Decorative, adhesive, cover and carrier layers as described in PCT/EP2019/078455, PCT/EP2022/059744 or PCT/EP2023/087749 can be used. Particularly preferably, the layer composite has one or more additional decorative layers arranged between the carrier layer and an optional cover layer. In a preferred embodiment, the additional layers are arranged on both sides of the carrier layer. Particularly preferred in this context is the symmetrical arrangement of the layers in relation to the carrier layer, for example a layer sequence: 1st cover layer of inventive coating, 1st decorative layer, carrier layer, 2nd decorative layer, 2nd cover layer of inventive coating. However, the inventive coating may act both as cover as well as decorative layer, *i.e.* fulfill both functions.

In a preferred embodiment of the invention, the layer composite has only adhesive layers as further layers. In another preferred embodiment, the layer composite has no layers other than carrier and decorative layers.

In a preferred embodiment, the individual thicknesses of these additional layers are 0.1 to 10 mm, more preferably 0.2 to 8 mm, particularly preferably 0.5 to 5 mm, most preferably 0.8 to 3 mm.

In a preferred embodiment, the basis weight (grammage) of the additional layers is 50 to 400 g/m$^2$, more preferably 65 to 300 g/m$^2$, particularly preferably 80 to 200 g/m$^2$, most preferably 90 to 150 m$^2$. A low weight per unit area allows particularly lightweight layer composites to be produced.

In a preferred embodiment, the layer composite may have one or more adhesive layers. The adhesive of the adhesive layers may be chemically curing and/or physically setting.

The adhesive of the adhesive layers is preferably selected from the group consisting of cyanoacrylates, methyl methacrylates, unsaturated polyesters, dispersion adhesives, solvent- or dispersion-containing wet adhesives. dispersion-containing wet adhesives, protein-based adhesives, hot-melt adhesives, plastisols, epoxy adhesives, polyurethane adhesives, silicones, resins, especially phenolic resins, polyimides, polysulphides, poly(meth)acrylates, polyvinyl acetates, rubbers and bismaleimides.

In order to produce the material in the most environmentally friendly way, protein adhesives are particularly preferred.

Preferably, the adhesive is cured by chemical hardening or solidification by cooling. In this way, small quantities of solvents or dispersants can be used or even solvents or dispersants can be dispensed with altogether. This is not only particularly sustainable, as a rule the processing times and the bonding within the layer composite are also better.

In a further advantageous embodiment, the strength, in particular the tensile strength and/or the bending strength, of one, several or all carrier layers and/or optional cover layer and/or optional adhesive layers is greater than that of the at least one decorative layer.

The tensile strength, also tear strength, is the maximum tensile stress that a body can withstand. It can be determined by a tensile test.

The bending tensile strength is the maximum tensile stress that a body can withstand when subjected to bending. It can be determined by means of a 3- or 4-point bending tensile test.

If, in an advantageous embodiment, the strength, in particular the tensile strength and/or bending tensile strength, of one, several or all carrier layers and/or optional cover layers and/or optional adhesive layers is greater than that of the at least one decorative layer, the carrier and/or optional cover and adhesive layers can take over the resulting stresses when subjected to mechanical stress, so that the at least one decorative layer does not break or only breaks under higher stress, as a result of which unfavourable cracks would occur in the layer determining the appearance.

The layer composite is strong, light-weight, scratch resistant, as well as water repellent. Therefore, it can preferably be used as a material for clothing and fashion accessories. According to the invention, clothing is defined as the totality of all materials which, as an artificial covering, surround the human body in a more or less tight-fitting manner. This also includes headgear, in particular hats and shoes. According to the invention, fashion accessory means accessories for clothing. These are preferably belts, gloves, fans, sunshades or umbrellas, bags, scarves and jewellery, in particular watch straps. All these materials may comprise the layer composite according to the invention.

The layer composite can also be used for coverings and for upholstery for furniture and in particular for automotive equipment. The present invention therefore also relates to coverings and upholstery comprising the layer composite according to the invention. Particularly preferably, this relates to upholstery and coverings for the interior fittings of motor vehicles, in particular the upholstery of seats and dashboards.

In a preferred embodiment of the invention the coating an object is coated with is perforated. Such a perforation may result in an improved moisture and gas exchange between the environment and the underlying material and an improved prevention of blisters.

In a preferred embodiment of the invention, the coating has a thickness of 5 μm - 3 mm. In this range the risk of sagging und running is significantly recued and concomitantly the layer is thick enough to provide an increased durability.

The invention also comprises a method for producing a coated object, which has the following steps:

I) applying the following components, preferably as a mixture, to an object to be coated to obtain an intermediate product disposed on the object and preferably covering ≥ 50% of the object's surface:

A) a polysaccharide binder,
B) a marine or limnic filler material, wherein the marine or limnic filler material is selected from the group consisting of marine minerals, hydrophytes, scales and/or skeletal elements of aquatic organisms, marine fungi, or mixtures of the foregoing,
C) a solvent, preferably a water-based solvent,

Optionally:
D) a plasticizer, namely a polyhydric alcohol, and

Optionally:
E) an additive selected from the group consisting of pigments, defoamers, fragrances, flame retardants, UV-stabilizer, or mixtures of the foregoing,

Optionally:

II) drying and/or curing the intermediate product to obtain a coated object, i.e. removing solvent, until weight constancy (i.e. less than 0.1% weight loss per hour when dried at 50°C) occurs, preferably at a temperature ≥ 30°C.

The mixture of the components A)-C) and optionally D) and/or E) is obtained by dissolving and/or dispersing the filler material, the binder, and optionally the plasticizer and an additive in a solvent.

The setting of the binder preferably takes place at a temperature ≥ 50°C, more preferably ≥ 70°C, but regularly ≤ 150°C.

The invention also relates to a composite material, in particular a coating, obtained by the above process.

The invention also relates to the use of the inventive composition in an injection moulding process for the production of an injection molded part.

## EXAMPLES

The invention will now be explained in more detail with the aid of a specific embodiment.

## Manufacturing Example 1

50 g of dried zosteraceae are dispersed in a mixture of alginate and agar-agar in 100 ml seawater and heated to 50°C, after decanting the excess dispersant, the composition is applied to a wood surface previously treated with a water-based acrylic coating. The aqueous solvent or dispersant is removed by air drying at 50°C to obtain a uniform decorative coating.

## Manufacturing Example 2

50 g of fish bone powder are dispersed in a mixture of alginate and agar-agar in 100 ml seawater and heated to 50°C, after decanting the excess dispersant, the composition is applied to a wood surface previously treated with a water-based acrylic coating. The aqueous solvent or dispersant is removed by air drying at 50°C to obtain a uniform decorative coating.

## Claims

1.　**Composition** comprising the following components:

A) a polysaccharide binder,
B) a filler material,
C) a solvent, preferably water,

**wherein** the filler material is a marine or limnic filler material, wherein the marine or limnic filler material is selected from the group consisting of marine minerals, hydrophytes, scales and/or skeletal elements of aquatic organisms, marine fungi, or mixtures of the foregoing.

2.　The **composition** according to claim 1, wherein the weight proportions of the components A) to C) in the composition are as follows:

A) 2-30 wt.-%, preferably 5-15 wt.-%, and/or
B) 3-35 wt.-%, preferably 5-15 wt.-%, and/or
C) 35-95 wt.-%. preferably 50-90 wt.-%.

3.　The **composition** according to any one of the preceding claims, further comprising following component:
D) a plasticizer, namely a polyhydric alcohol,
wherein the weight proportion of the component D) in the composition is preferably 2-30 wt.-%, more preferably 5-15 wt.-%.

4.　The **composition** according to any one of the preceding claims, further comprising following component:
E) an additive selected from the group consisting of pigments, defoamers, flame retardants, fragrances, UV stabilizer, hydrophobic agents, or mixtures of the foregoing,
wherein the weight proportion of the component E) in the composition is preferably 0.5-30 wt.-%, more preferably 2-10 wt.-%.

5.　The **composition** according to any one of the preceding claims, wherein the composition comprises a marine mineral as marine or limnic filler material, wherein the marine mineral is selected from the group consisting of metallic marine minerals and non-metallic marine minerals, or mixtures of the foregoing.

6.　The **composition** according to any one of the preceding claims, wherein the composition comprises a hydrophyte as marine or limnic filler material, wherein the hydrophyte is selected from the group consisting of algae, preferably brown algae, red algae, green algae and diatoms; seagrass, preferably hydrocharitaceae, zosteraceae, and cymodoceaceae; mangroves; or mixtures of the foregoing.

7.　The **composition** according to any one of the preceding claims, wherein the composition comprises skeletal elements of aquatic organisms as marine or limnic filler material, wherein the skeletal elements of aquatic organisms are selected from the group consisting of endoskeletons, preferably fish bones, ossicles of echinoderms, spicules of porifera, gorgonian sclerites; exoskeletons, preferably of corals, crustaceans, mollusks, bryozoans; tunics of tunicates; or mixtures of the foregoing.

8.  The **composition** according to any one of the preceding claims, wherein the polysaccharide binder is isolated from a marine organism and/or wherein the polysaccharide binder is selected from the group consisting of agar-agar, alginate, carrageenan, alginic acid, chitosan or mixtures of the foregoing.

9.  The **composition** according to any one of the preceding claims, wherein the solvent is seawater.

10. The **composition** according to any one of claims 3-9, wherein the polyhydric alcohol is an aliphatic alcohol, preferably a $C_2$ to $C_{10}$ polyhydric aliphatic alcohol.

11. The **composition** according to claim 10, wherein the polyhydric alcohol is selected from the group consisting of glycerol, sorbitol, 1,2-propanediol, glycol, or alditols.

12. **Composite,** preferably in the form of a coating, comprising the following components:

    A) a polysaccharide binder,
    B) a filler material,
    **characterized in that** the filler material is a marine or limnic filler material, wherein the marine or limnic filler material is selected from the group consisting of marine minerals, hydrophytes, scales and/or skeletal elements of aquatic organisms, marine fungi, or mixtures of the foregoing,
    and optionally
    C) a plasticizer, such as a polyhydric alcohol,

    wherein, preferably, the weight proportions of the components A) and B) in the composite are as follows:

    A) 40-95 wt.-%,
    B) 5-60 wt.-%.

13. **Composite** according to claim 12, wherein the composite has a transmission in the visible wavelength range of $\geq$ 30%, and/or the water content in the composite is $\leq$ 2 wt.-%.

14. **Object** coated with a composite as defined in any of the preceding claims, wherein the object is selected from the group consisting of automotive parts, steel objects, leather, artificial leather, foams, in particular bio-based foams and/or latex foams; fiber materials such as yarns or textiles, appliances, tools, wood objects, electronic devices, footwear, textiles, paper products, concrete objects, medical devices, food or beverage containers.

15. **Object** according to claim 14, wherein the coating is perforated and/or has a thickness of 5 $\mu$m - 3 mm.

**EUROPEAN SEARCH REPORT**

Application Number

EP 24 18 5805

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 106 433 325 A (WANG WEILI) 22 February 2017 (2017-02-22) * claims 1-3; examples 1-3 * ----- | 1-15 | INV. C09D5/00 C09D7/61 C09D7/63 C09D105/00 |
| X | CN 109 161 255 A (HEFEI PINGUAN ENVIRONMENTAL PROTECTION AND TECH CO LTD) 8 January 2019 (2019-01-08) * claims 1-7; examples 1-3 * ----- | 1-15 | |
| X | CN 105 670 430 B (ZHOUSHAN MARINE ENV MONITORING AND FORECASTING CENTER) 11 May 2018 (2018-05-11) * claims 1-5; examples 1, 2 * ----- | 1-15 | |
| X | CN 109 593 470 A (TAIZHOU ZHONGKAI IND CO LTD) 9 April 2019 (2019-04-09) * examples 1-5 * ----- | 1-15 | |
| X | CN 107 868 552 A (YANCHENG TIANSHUN MACHINERY TECH CO LTD) 3 April 2018 (2018-04-03) * claims 1-5; examples 1-4 * ----- | 1,2,4-9, 12-15 | TECHNICAL FIELDS SEARCHED (IPC) C09D C09J |
| X | CN 109 897 407 A (CHAOZHOU BAOMEI ENVIRONMENTAL PROTECTION TECH CO LTD) 18 June 2019 (2019-06-18) * examples 1-5 * ----- | 1,2,4-9, 12-15 | |

The present search report has been drawn up for all claims

| Place of search | Date of completion of the search | Examiner |
|---|---|---|
| Munich | 22 November 2024 | Schmitt, Johannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................

& : member of the same patent family, corresponding document

EPO FORM 1503 03.82 (P04C01)

**EP 4 674 918 A1**

## ANNEX TO THE EUROPEAN SEARCH REPORT
## ON EUROPEAN PATENT APPLICATION NO.

EP 24 18 5805

22-11-2024

| Patent document cited in search report | | Publication date | Patent family member(s) | Publication date |
|---|---|---|---|---|
| CN 106433325 | A | 22-02-2017 | NONE | |
| CN 109161255 | A | 08-01-2019 | NONE | |
| CN 105670430 | B | 11-05-2018 | NONE | |
| CN 109593470 | A | 09-04-2019 | NONE | |
| CN 107868552 | A | 03-04-2018 | NONE | |
| CN 109897407 | A | 18-06-2019 | NONE | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2019078455 W
- EP 2022059744 W

- EP 2023087749 W